# EUROPEAN PATENT SPECIFICATION

(11) **EP 1 641 589 B1**
(45) Date of publication and mention of the grant of the patent: **09.12.2009**
(21) Application number: 04744946.7
(22) Date of filing: 07.07.2004
(51) Int. Cl.: B23K 20/06, B21D 51/26

(54) **MAGNETIC PULSE WELDING METHOD FOR SEALING A VESSEL**
MAGNETIMPULS-SCHWEISSVERFAHREN ZUR ABDICHTUNG EINES GEFÄSSES
PROCEDE DE SOUDAGE A IMPULSIONS MAGNETIQUES D'UN CONTAINEUR

(30) Priority: 07.07.2003 US 484678 P
(43) Date of publication of application: 05.04.2006
(73) Proprietor: Pulsar Welding Ltd., Yavne 81103 (IL)
(72) Inventor: GAFRI, Oren, 75241 Rishon Le-Zion (IL); LIVSHIZ, Yuri, 75355 Rishon Le-Zion (IL)
(74) Representative: Modiano, Micaela Nadia
(86) International application number: PCT/IL2004/000606
(87) International publication number: WO 2005/002777

(56) References cited:
- US-A- 3 528 596
- US-A- 5 191 775
- US-A- 6 137 094
- US-A1- 2002 116 817
- US-B1- 6 389 697
- US-B1- 6 539 745
- US-B2- 6 548 791

## Description

### FIELD OF THE INVENTION

This invention relates to a method of sealing vessels by a pulsed magnetic force (PMF) according to the preamble of claim 1 (see, for example, US 2002/116817 A).

### BACKGROUND OF THE INVENTION

A vessel such as a container, canister, tank, flask, etc. used, for example, for gas and/or liquid storage is usually produced by manufacturing a vessel body portion and a cover portion separately. For sealing the vessel, welding or crimping methods can be used for coupling the cover portion to the vessel body portion. Welding hereinafter refers to a process in which two opposite surfaces of first and second workpieces form a physical joint, thereby become integrated with one another owing to mutual diffusion of their atoms. In turn, crimping refers to such joining of two workpieces, when a surface of at least one of the work-pieces becomes wavy, bent, or pinched so as to provide a "pure" mechanical joint between the two workpieces without interpenetration of the atoms of the first workpiece into the body of the second workpiece.

The crimping is usually made by stamping or rolling. However, various crimping techniques are also known in the art which utilize the force generated by a transient magnetic field for sealing vessels.

For example, U.S. Pat. No. 3,581,456 to Gere describes a method for forming a closure on the neck finish of a filled container which utilizes the force generated by a transient magnetic field. The skirt of a cap, positioned on the neck of the container, is urged by the field against the neck finish so as to cause the skirt to conform to the contours of the neck finish and to thereby hold the cap in engagement with the neck finish upon the neck of the container.

U.S. Pat. No. 3,957,005 describes a method for making a metal can end that includes a body portion of substantially uniform metal thickness and a peripheral flange of reduced metal thickness. The can end is formed from relatively thin sheet material, such as aluminum sheet or the like, by punching or shearing a blank or disc from the sheet and forming the disc into a cup which is subjected to an ironing operation to reduce the thickness of the peripheral portion thereof and increase its projecting length. The ironed cup is then subjected to mechanical pressing, or magnetic discharge forming, to shape the peripheral portion into a curvilinear flange which is adapted to be double seamed to the can body.

U.S. Pat. No. 4,934,552 to Koide et al. describes a method for producing a sealed vessel including a cylindrical body portion having an open end, and a cover fitting in the open end of the body portion. The sealed vessel is produced by pressing the open end of the body portion from the outside of the body portion to an outer peripheral surface of the cover provided with at least one of annular grooves around the outer peripheral surface of the cover. In the case of using an electromagnetic force as the means for press-working, a part of the body portion is strictly and air-tightly fixed to the annular grooves in a moment and thus the sealed vessel is produced.

U.S. Pat. No. 5,191,775 to Shiina et al. describes a technique for sealing a refrigerating-medium storage vessel which comprises a tubular body having a bottom and an open upper end portion, and a closure fitted in the open end portion. The open end portion is constricted and crimped by electromagnetic forming and is thereby secured to the closure by beading and matching groove. U.S. Pat. No. 5,191,775 states that the method does not employ welding for joining the closure to the body.

U.S. Pat. No. 5,671,522 to Aronne describes another crimping technique for sealing a container by magnetic pulse forming techniques. The container is closed by means of a pair of specially constructed end caps each having annular recesses formed around their circumference. The ends of the container are engaged within the recess and joined by magnetic pulse forming. The magnetic pulse force is asserted radially inward against a mandrel which mates with a depression formed in the caps.

The conventional welding is usually carried out by a gas welding apparatus, laser or any other conventional welding technique. It is known in the art that the gas welding techniques suffer from different disadvantages, e.g., the vessel body must be made of a heatproof material, etc.

It is known in the art (see, for example, U.S. Pat. No. 5,824,998 to the Assignee of this application) that pulsed magnetic forming techniques can also be used for cold welding two metal workpieces.

U.S. Pat. No. 3,528,596 to Carlson describes an apparatus in which a tubular metal workpiece is joined together with a cylindrical metal piece without hot welding. In particular, Carlson teaches to use a specific combination or design of rings and grooves for sealing a cylindrical container using magnetic pulse forming process.

U. S. Patent Application No. 2002/116817 describes a method for manufacturing a device that comprises disposing a first end around a second end, disposing an induction coil around the first end, discharging a current through the induction coil, forming eddy currents on the surface of the first end, and magnetic impulse sizing the first end and the second end together. The first end disposed around the second end comprises a tube end disposed around an end of the device or the first end disposed around the second end comprises the device end disposed around the tube end.

U.S. Pat No. 6137094 to Kistersky et al. describes an external inductor for magnetic pulse welding and forming that includes an outer steel frame and an inner beryllium-bronze alloy insert which is removably mounted within the frame. The steel frame and the beryllium bronze insert respectively split the responsibility for higher mechanical strength and more concentrated pulse current on the inner surface of inductor's central opening. The improved external inductor design is capable of creating greater impulse forces onto the outer workpiece and has been demonstrated to perform at least 25 - 30% more deformation than a simple one piece simple steel external inductor for a full metallurgical joint.

### SUMMARY OF THE INVENTION

Despite the prior art in the area of sealing containers by magnetic pulse forming techniques, there is still a need in the art for, and it would be useful to have, a novel method of sealing vessels by utilizing magnetic pulse force (PMF). It would be advantageous to facilitate joining a vessel body and a cover by cold welding providing mutual diffusion of their atoms.

Thus, according to one broad aspect of the invention there is provided a method of sealing a vessel according to claim 1.

There has thus been outlined, rather broadly, the more important features of the invention in order that the detailed description thereof that follows hereinafter may be better understood. Additional details and advantages of the invention will be set forth in the detailed description, and in part will be appreciated from the description, or may be learned by practice of the invention.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:
**Fig. 1A** and **Fig. 1B** illustrate an exploded view and a cross-sectional view of a vessel before a sealing process, according to one embodiment of the invention;
**Figs. 2A-2D** illustrate a sequence of stages of the welding process, according to an embodiment of the invention;
**Fig. 3A** and **Fig. 3B** illustrate exemplary images obtained from the examination under an optic microscope of an etched interface cross-section of the joint between a vessel's welding portion and a cover's welding part made of low carbon steel and aluminum, respectively;
**Fig. 4A** and **Fig. 4B** illustrate an exploded view and a cross-sectional view of the vessel before a welding process, correspondingly, according to another embodiment of the invention;
**Fig. 5** illustrates a cross-sectional view of the vessel before a welding process, according to a further embodiment of the invention;
**Fig. 6** illustrates a cross-sectional view of the vessel before a welding process, according to yet another embodiment of the invention;
**Figs. 7A-7C** illustrate cross-sectional views of the vessel before a welding process, according to a still further embodiments of the invention; and
**Fig. 8A** and **Fig. 8B** illustrate a prospective view and a cross-sectional view of the welding induction coil, correspondingly, which could be used to put in practice the method of the present invention.

### DETAILED DESCRIPTION OF THE INVENTION

The principles and operation of a method and an apparatus according to the present invention may be better understood with reference to the drawings and the accompanying description, it being understood that these drawings are given for illustrative purposes only and are not meant to be limiting. The same reference numerals will be utilized for identifying those components which are common in the vessel and the working coil shown in the drawings throughout the present description of the invention. Dimensions of vessel, thickness of the walls of the vessel and cover as well as gaps between the vessel and cover and their portions may be exaggerated for clarity.

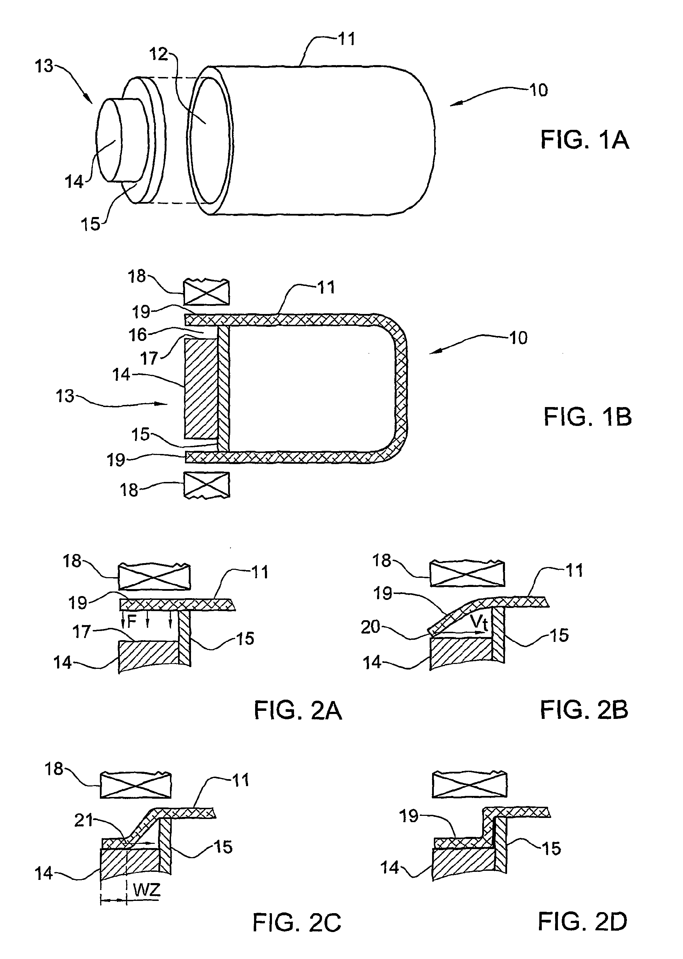

Referring to **Fig. 1A** and **Fig. 1B****,** an exploded view and a cross-sectional view of a vessel **10** before a welding process are illustrated, correspondingly, according to one embodiment of the invention. The vessel **10** includes a cylindrical vessel's body **11** having an open end **12** and a cover **13.** The cover **13** has a welding part **14** and a brim part **15.** The purpose of the brim part **15** is to hold the cover **13** inside the vessel's body **11.** Therefore, a diameter of the cover **13** at the brim part **15** is equal to the inner diameter of the vessel's body **11.** A diameter of the cover **13** at the welding part **14** is less than the inner diameter of the vessel's body. Thus, an annular air gap **16** is provided between a vessel's welding portion **19** and a surface **17** of the cover's welding part **14,** when the cover **13** is placed into the open end **12** of the vessel's body **11.**

The vessel 10 may be constructed of any suitable metal material having the required strength and forming characteristics for the particular application. It should be appreciated that the vessel's body **11** and the cover **13** can be made of the same material or different materials. Examples of the metal materials from which the vessel's body **11** and the cover **13** are made include, but are not limited to, aluminum, low carbon steel, brass, copper. It should be appreciated that alloys of these and other materials can also be used.

In order to provide a force required to weld the cover **13** to the vessel's body **11,** a high power pulsed magnetic field is generated around the vessel's body **11** at the place where the cover's welding part **14** is located inside the vessel's body **11.** A device suitable for providing a required magnetic pulsed magnetic field is known *per se*, and therefore its construction and operation will not be expounded herebelow. For example, the device described in U.S. Pat. No. 5,824,998 to the Assignee of this application, incorporated herein by reference, can be used for the purpose of the present invention. Such a device includes a welding induction coil, which can be configured in accordance with a specific application. In **Fig. 1B** the welding induction coil surrounds the vessel's body **11** and is indicated by a reference numeral **18.** An example of the configuration of the welding induction coil **18** suitable for the present invention will be described in detail hereinbelow.

Referring to **Figs. 2A-2D****,** a sequence of stages of the welding process is illustrated, according to an embodiment of the invention. It should be noted that these figures are not to scale, and are not in proportion, for purposes of clarity. In operation, a pulsed magnetic force **F,** associated with the magnetic field generated by the welding induction coil, is applied to the welding portion **19** of the vessel's body **11** (see **Fig. 2A**)**.** According to this embodiment, the welding portion **19** is located near the open end **12** of the vessel's body **11.** However, it should be understood that the location of the vessel's welding portion **19** is not limited to any part of the vessel's body **11** along its length.

The process of welding the vessel **10** for sealing thereof includes energizing the welding induction coil **18** to produce the pulsed magnetic force **F** for bending the vessel's welding portion **19** in a radially inward direction around the cover's welding part **14.** The welding starts at the moment when an edge **20** of the welding portion **19** contacts the surface **17** of the cover's welding part **14** (see **Fig. 2B****).** During the welding, the front line **21,** defining the welding zone **WZ,** moves tangentially towards the brim part 15 (see Fig. **2C**), thereby sealing the vessel (see **Fig.2D****).**

It should be understood that in order to provide the welding of the vessel's body and the cover owing to the mutual diffusion of the atoms, the pulsed magnetic force **F** should have a predetermined value. More specifically, the pulsed magnetic force **F** must have such a value so that the vessel's welding portion **19,** during its movement in the gap **16** towards the surface **17** of the cover's welding part **14,** could attain a speed sufficient for welding the vessel's body to the cover. According to the present invention, the applicants found that the welding is established when an effective speed value of the vessel's welding portion **19** at the impact is in the range of 250m/sec-500m/sec and the apparent tangential speed **Vₜ** of the front line **21** is in the range of 1000m/sec-2500m/sec.

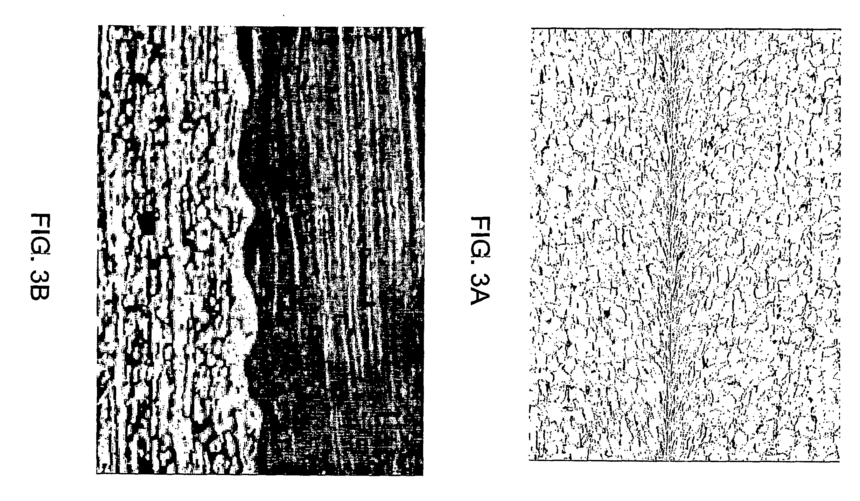

**Figs. 3A** and **3B** illustrate exemplary images obtained from the examination under an optic microscope (magnification: X100) of a cross-section of an etched interface of the joint between the vessel's welding portion **19** and the cover's welding part **14** made of two similar metals, such as low carbon steel and aluminum, respectively. **Fig. 3A** shows a typical flat shear-like welded interface, while **Fig. 3B** shows a typical wavy interface. The flat shear-like welded interface can be obtained when the angle between the vessel's welding portion **19** and the cover's welding part **14** at the impact is relatively small, while the wavy interface is obtained when the impact angle is relatively large. It should be noted that the magnitude of the angle when the flat shear-like welded interface changes to the wavy interface depends on the impact speed and type of material. As can be appreciated by a person skilled in the art, such an image is a typical picture when a joint is obtained by a pulsed magnetic welding process.

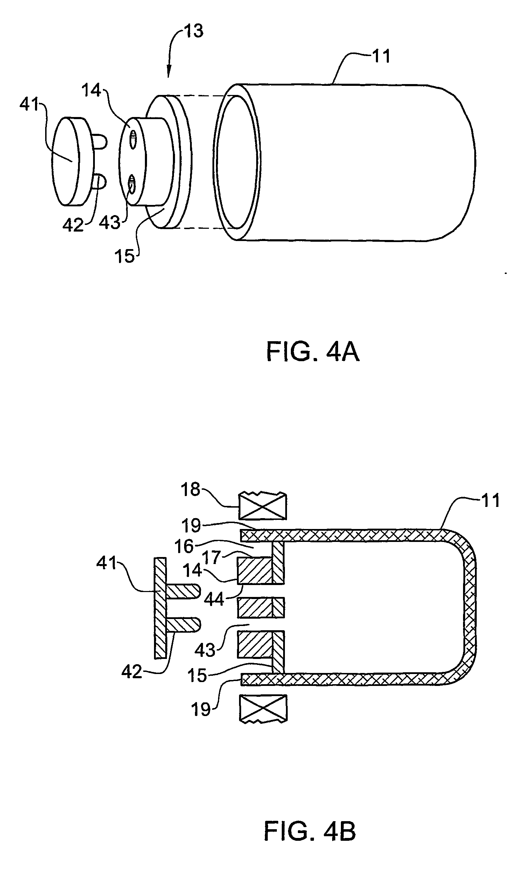

Referring to **Fig. 4A** and **Fig. 4B****,** an exploded view and a cross-sectional view of the vessel **10** before a welding process are illustrated, correspondingly, according to another embodiment of the invention. This embodiment distinguishes from that shown above in **Figs. 1A** and **4B** by the fact that the cover **13** here includes openings (one or more). In particular, two such openings indicated by a reference numeral **43** are shown in **Fig. 4A** and **Fig. 4B****.** For example, when the vessel **10** is used as a container, the openings **43** can be required for inserting inlet and outlet pipes therein.

In this case, when the width of the metal material between the inner surface **44** of the openings **43** and the surface **17** of the cover's welding part **14** is small and/or the strength of the material of the cover is small, the pulsed magnetic force, applied for sealing the vessel as described above, can be high enough in order to cause a collapse of the cover's welding part **14** and to deform the openings **43.** In order to avoid this detrimental phenomenon, a technological plug **41** can be utilized together with the cover **13.** The technological plug **41** has one or more pins **42** (two such pins **42** are shown in **Figs. 4A** and **4B****)** configured for inserting them into the openings **43** of the cover **13** and holding therein during the energizing of the welding induction coil **18.** After the energizing step, the technological plug **41** can be detached from the sealed vessel. Preferably, the dimension of the pins is such that they could fill the space of the openings, thereby providing reinforcement to the cover **13.** The pins **42** are made of a material as hard as the material of the cover **13** or even harder than the material of the cover, e.g., hardened steel.

It should be noted that in accordance with yet an embodiment of the invention, when the technological plug **41** is utilized for preventing deformation of the openings **43,** the cover 13 can be without the brim part **15.** In such a case, preferably, the diameter of the plug **41** conforms to the inner diameter of the vessel's body **11,** thereby holding the plug together with the cover **13** within the vessel's body **11.** After the sealing process, the plug **41** is detached from the vessel's body **11.**

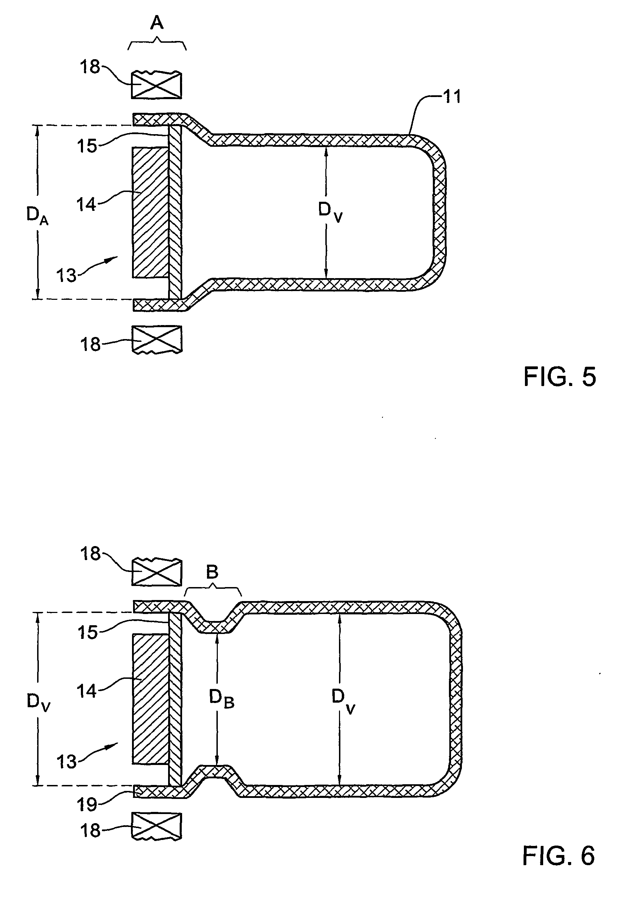

Referring to **Fig. 5** a cross-sectional view of the **vessel 10** before a welding process is illustrated, according to a further embodiment of the invention. This embodiment distinguishes from that described in **Figs. 1A** and **1B** by the fact that the vessel's body **11** is expanded at the open end **12** before the welding process, thereby forming an expanded zone **A.** A diameter D_{A} of the vessel's body **11** at the expanded zone A has a value larger than that of the diameter D_{V} of the vessel's body **11** at its remaining portion. The expanded zone **A** is provided for the better holding of the cover **13** within the vessel's body **11.** Thus, before the welding process, according to this embodiment, a value of the diameter D_{CB} of the cover brim part **15** should be about the value of the diameter of the expanded zone **A** (i.e., D_{CB} 3 ≈D_{A}), while the diameter D_{CW} of the cover welding part **14** has to comply with the following inequality: D_{V} < D_{CW} < D_{A}.

Although no openings are shown in **Fig. 5** in the cover **13,** it can be clear to a versed person that when required, the cover can have one or more openings. In such a case, the technological plug **(41** in Fig. 4A) can be used in order to protect the cover from deformation during the welding process.

Referring to **Fig. 6****,** a cross-sectional view of the vessel **10** before a welding process is illustrated, according to yet another embodiment of the invention. This embodiment distinguishes from that described in **Figs. 1A** and **1B** by the fact that the vessel's body **11** has an undulated zone B near the open end **12.** The undulated zone B is formed on the vessel's body **11** before the welding process and begins at a distance equal to the size of the cover welding part **14.** The purpose of the undulated zone B is to provide better holding of the cover **13** within the vessel's body **11.** Hence, a diameter D_{B} of the undulated zone B has a value smaller than the diameter D_{V} at the remaining portion of the vessel (i.e., D_{B} < D_{V}). According to this embodiment of the invention, the value of the diameter D_{CB} of the cover brim part **15** should be about the value of the diameter of the vessel's body **11** (i.e., D_{CB} ≈D_{V}), while the diameter D_{CW} of the cover's welding part **14** has to comply with the following inequality: D_{B} < D_{CW} < D_{V}.

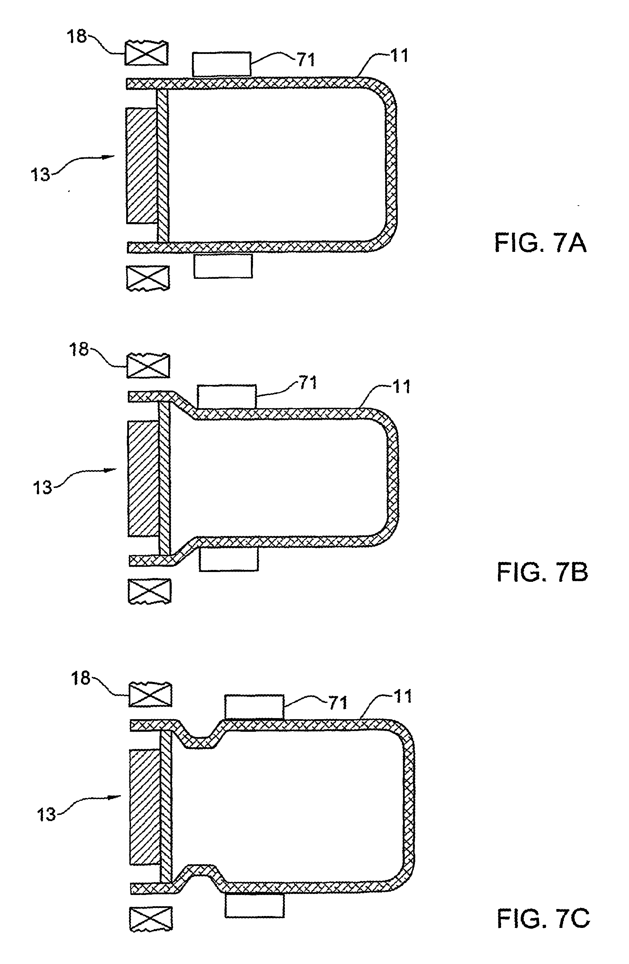

Referring to **Figs. 7A-7C****,** cross-sectional views of the vessel **10** before a welding process are illustrated, according to a still further embodiments of the invention. These embodiments distinguish from those described above in the fact that an insulated cylinder **71** is put on the vessel's body **11** for a further reinforcement of the vessel's body **11** during the welding. Thus, preferably, the inner diameter of the insulated cylinder 71 is equal to the outer diameter of the vessel's body **11.**

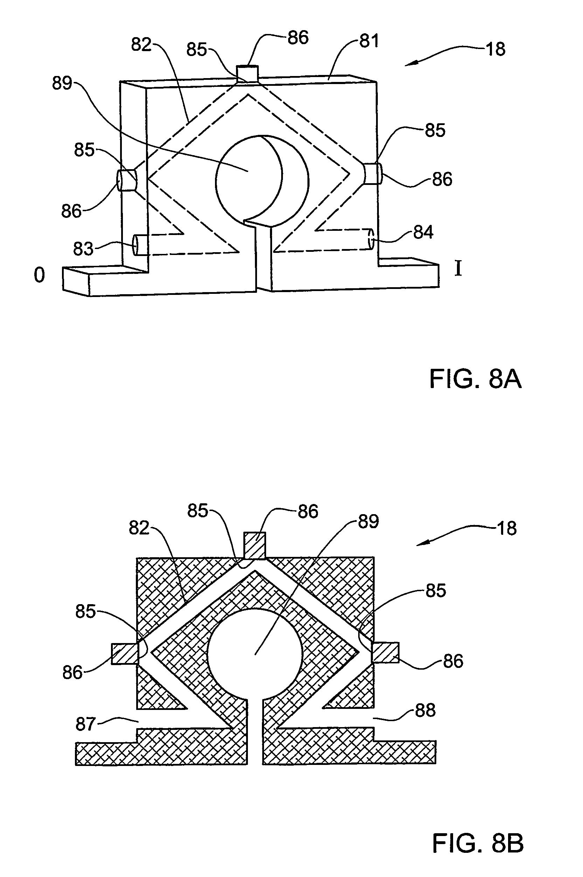

Referring to **Fig. 8A** and **Fig. 8B****,** a prospective view and a cross-sectional view of the welding induction coil **18,** which can be used in the method of the present invention, are illustrated. The welding induction coil **18** includes a one-turn coil **81** having a canal **82** formed into the coil's body for providing a passage of cooling liquids therethrough. For example, the canal **82** can be drilled during fabrication of the coil. Two inlets **83** and **84** communicating with the canal **82** can be used for input and output of liquid, (e.g. water) passing through the coil **18** for cooling thereof during the welding process. Three other technical inlets **85** created in the coil's body during the drilling of the canal **82** are closed by plugs **86,** in order to avoid the leakage of the cooling liquid. The inlets **83** and **84** are connected to a liquid supply line (not shown). When required, the liquid supply line can be equipped with a liquid pump. When required, the liquid supply line can pass through a cooling system. The cooling system is known *per se,* and can be of any conventional kind, e.g., a radiator.

The welding induction coil **18** includes two electrodes I and O coupled to an electric power supply source. For example, the power supply source described in U.S. Pat. No. 5,824,998 to Assignee of this application and incorporated herein by reference can be suitable for the purpose of the invention.

In operation, the vessel's body **11** can be placed into a working zone **89** of the welding induction coil **18,** preferably, at a distance of about 1-3 mm from an inner surface **90** of the one-turn coil **81.** The providing and holding of the vessel's body **11** within the welding induction coil **18** can be done by any appropriate known means. For example, the vessel's body can be driven to the welding zone of the working induction coil by means of a pneumatic cylinder (not shown) or by a hydraulic cylinder (not shown). The working voltage suitable for the purpose of the invention is in the range of about 3kV to 25 kV This voltage can provide a pulsed electric current across the one-turn coil **81** having the amplitude of about 10kA to 1000kA.

It is apparent that although the examples of the method of scaling a vessel according to the present invention were shown with vessel body portion having a circular cross-section, the sealing method of the present invention can be applied, *mutatis mutandis,* for the sealing of a vessel having an arbitrary cross-sectional shape.

It is important, therefore, that the scope of the invention is not construed as being limited by the illustrative embodiments set forth herein. Other variations are possible within the scope of the present invention as defined in the appended claims.

## Claims

1. A method of sealing a vessel (10), comprising:
(a) providing a vessel's body (11) having at least one an open end (12);
(b) providing a cover (13) having a welding part (14), where said welding part has a diameter less than the inner diameter of the vessel's body;
(c) placing the cover (13) within said at least one an open end (12) of the vessel's body (11), thereby an air gap (16) is formed between said vessel's body (11) and the welding part (14) of said cover (13);
(d) providing a welding induction coil (18) around said vessel's body (11) at the place where the welding part (14) of the cover is located; and
**characterised by** the further step of:
(e) energizing said welding induction coil (18) by applying a working voltage thereacross having a predetermined value required to generate a pulsed magnetic force sufficient to cause bending a portion (19) of the vessel's body (11) in a radially inward direction around the cover (13) in said air gap, wherein wherein said predetermined voltage has such a value so that (i) said portion (19) of the vessel's body during its movement towards the cover's welding part (14) attains at the impact a speed value in the inward direction in the range of about 250m/sec to 500m/see and (ii) a contact front line (21) attains at the impact a tangential speed value in the range of about 1000m/sec to 2500m/sec, thereby welding said vessel's body (11) and the cover (13) to each other.

2. The method of claim 1 comprising expanding the vessel's body (11) art the open end (12) before said placing of the cover (13) within said open end (12) of the vessel's body (11), thereby providing enhanced holding the cover (13) within the vessel's body (11).

3. The method of claim 1 comprising forming an undulated zone (B) on the vessel's body before said placing of the cover (13) within the open end (12) of the vessel's body (11), said undulated zone (B) begins at a distance equal to the size of the cover's welding part (14), thereby providing enhanced holding the cover (13) within the vessel's body (11).

4. The method of any one of the preceding claims wherein said cover (13) includes at least one opening (43) suitable for inserting a pipe therein.

5. The method of claim 4 comprising:
- providing a technological plug (41) having at least one pin (42) conforming with said at least one opening (43); and
- inserting the technological plug (41) into said at least one opening (43) of the cover (13) before the energizing of the coil (18), thereby.

6. The method of claim 5 wherein the pin (41) a made of a material as hard as the materials of the cover (13).

7. The method of claim 5 wherein the pin (41) is made of a material harder than the material of the cover (43).

8. The method of claim 7 wherein pins (41) are made of hardened steel.

9. The method of any one of the preceding claims wherein said vessel's body and said cover are made of the same material.

10. The method of any one of claims 1 to 8 wherein said vessel's body (11) and said cover (13) are made of different materials.

11. The method of any one of the preceding claims wherein said vessel's body (11) and said cover (13) are made of a material selected from aluminum, low carbon steel, brass, copper and their alloys.

12. The method of any one of the preceding claims comprising putting on an insulated cylinder (71) on the vessels body (11) during the energizing said welding induction coil (18).

13. The method of any one of the preceding claims, wherein said cover (13) further includes a brim part (15), where a value of a diameter of the cover (13) at the brim part (15) is equal to the value of an inner diameter of the vessel's body (11), thereby to provide holding the cover (13) within the vessel's body (11) before the vessel (10) have been sealed.

## Patentansprüche

1. Ein Verfahren zur Abdichtung eines Gefäßes (10), das Folgendes umfasst:
(a) Bereitstellung des Körpers (11) eines Gefäßes, der mindestens ein offenes Ende (12) hat,
(b) Bereitstellung eines Deckels (13) mit einem Schweißteil (14), wobei der Schweißteil einen Durchmesser hat, der kleiner ist als der Innendurchmesser des Körpers des Gefäßes,
(c) Platzierung des Deckels (13) in das mindestens eine offene Ende (12) des Körpers (11) des Gefäßes, wodurch ein Luftspalt (16) zwischen dem Körper (11) des Gefäßes und dem Schweißteil (14) des Deckels (13) gebildet wird,
(d) Bereitstellung einer Schweiß-Induktionsspule (18) um den Körper (11) des Gefäßes herum an der Stelle, wo sich der Schweißteil (14) des Deckels befindet, und
**gekennzeichnet durch** weiteren folgenden Schritt:
(e) Erregung der Schweiß-Induktionsspule (18) **durch** Anlegen einer Arbeitsspannung an dieselbe, die einen vordefinierten Wert hat, welcher erforderlich ist, um eine gepulste magnetische Kraft zu erzeugen, die ausreicht, um das Biegen eines Abschnitts (19) des Körpers (11) des Gefäßes in eine Richtung radial einwärts um den Deckel (13) herum in den Luftspalt zu veranlassen,
wobei die vordefinierte Spannung einen solchen Wert hat, dass (i) der Abschnitt (19) des Körpers des Gefäßes während seiner Bewegung zum Schweißteil (14) des Deckels hin beim Aufschlag einen Geschwindigkeitswert in die Richtung einwärts im Bereich von ungefähr 250 m/sek. bis 500 m/sek. erreicht und (ii) eine vordere Kontaktlinie (21) beim Aufschlag einen Tangentialgeschwindigkeitswert im Bereich von ungefähr 1000 m/sek. bis 2500 m/sek. erreicht, wodurch der Körper (11) des Gefäßes und der Deckel (13) miteinander verschweißt werden.

2. Das Verfahren gemäß Anspruch 1, das das Verbreitern des Körpers (11) des Gefäßes am offenen Ende (12) vor dem Platzieren des Deckels (13) in das offene Ende (12) des Körpers (11) des Gefäßes umfasst, wodurch ein verbessertes Halten des Deckels (13) im Körper (11) des Gefäßes ermöglicht wird.

3. Das Verfahren gemäß Anspruch 1, das das Formen einer wellenförmigen Zone (B) am Körper des Gefäßes vor der Platzierung des Deckels (13) in das offene Ende (12) des Körpers (11) des Gefäßes umfasst; wobei die wellenförmige Zone (B) in einem Abstand gleich der Größe des Schweißteils (14) des Deckels beginnt, wodurch ein verbessertes Halten des Deckels (13) im Körper (11) des Gefäßes ermöglicht wird.

4. Das Verfahren gemäß einem beliebigen der obigen Ansprüche, wobei der Deckel (13) mindestens eine Öffnung (43) einschließt, die geeignet ist, um ein Rohr dort einzusetzen.

5. Das Verfahren gemäß Anspruch 4, das Folgendes umfasst:
Bereitstellung eines technologischen Stöpsels (41) mit mindestens einem Stift (42), der in die mindestens eine Öffnung (43) passt, und
Einsetzen des technologischen Stöpsels (41) in die mindestens eine Öffnung (43) des Deckels (13), bevor die Spule (18) **dadurch** erregt wird.

6. Das Verfahren gemäß Anspruch 5, wobei der Stift (41) aus einem Material besteht, das so hart ist wie das Material des Deckels (13).

7. Das Verfahren gemäß Anspruch 5, wobei der Stift (41) aus einem Material besteht, das härter ist als das Material des Deckels (13).

8. Das Verfahren gemäß Anspruch 7, wobei die Stifte (41) aus gehärtetem Stahl bestehen.

9. Das Verfahren gemäß einem beliebigen der obigen Ansprüche, wobei der Körper (11) des Gefäßes und der Deckel (13) aus demselben Material bestehen.

10. Das Verfahren gemäß einem beliebigen der Ansprüche 1 bis 8, wobei der Körper (11) des Gefäßes und der Deckel (13) aus verschiedenen Materialien bestehen.

11. Das Verfahren gemäß einem beliebigen der obigen Ansprüche, wobei der Körper (11) des Gefäßes und der Deckel (13) aus einem Material bestehen, das gewählt ist aus Aluminium, kohlenstoffarmem Stahl, Messing, Kupfer und ihren Legierungen.

12. Das Verfahren gemäß einem beliebigen der obigen Ansprüche, das das Aufsetzen eines isolierten Zylinders (71) auf den Körper (11) des Gefäßes während des Erregens der Schweiß-Induktionsspule (18) umfasst.

13. Das Verfahren gemäß einem beliebigen der obigen Ansprüche, wobei der Deckel (13) weiter einen Randteil (15) einschließt, wo ein Wert eines Durchmessers des Deckels (13) am Randteil (15) gleich dem Wert eines Innendurchmessers des Körpers des Gefäßes ist, um so für das Halten des Deckels (13) im Körper (11) des Gefäßes zu sorgen, bevor das Gefäß (10) abgedichtet wurde.

## Revendications

1. Procédé de soudage d'un récipient (10), comprenant :
(a) la fourniture d'un corps de récipient (11) ayant au moins une extrémité (12) ouverte ;
(b) la fourniture d'un couvercle (13) ayant une partie de soudage (14), dans laquelle ladite partie de soudage présente un diamètre plus petit que le diamètre intérieur du corps de récipient ;
(c) le placement du couvercle (13) à l'intérieur de ladite au moins une extrémité (12) ouverte du corps de récipient (11), de manière qu'un interstice (16) soit formé entre ledit corps de récipient (11) et la partie de soudage (14) dudit couvercle (13) ;
(d) la fourniture d'une bobine d'induction de soudage (18) autour dudit corps de récipient (11), à l'emplacement auquel la partie de soudage (14) du couvercle est située ; et
**caractérisé par** l'étape supplémentaire :
(e) d'alimentation en énergie de ladite bobine d'induction de soudage (18), par application sur elle d'une tension électrique de travail, d'une valeur prédéterminée, nécessaire pour générer une force magnétique pulsée, suffisante pour provoquer le cintrage d'une partie (19) du corps de récipient (11) dans une direction orientée radialement vers l'intérieur, autour du couvercle (13), dans ledit interstice, dans lequel ladite tension électrique prédéterminée présente une valeur telle que (i) ladite partie (19) du corps de récipient, durant son déplacement vers la partie de soudage (14) du couvercle, atteint à l'impact une valeur de vitesse, dans le sens de l'intérieur, dans la fourchette allant d'à peu près 250 m/s à 500 mis et (ii) une ligne frontale de contact (21) atteint à l'impact une valeur de vitesse tangentielle dans la fourchette allant d'à peu près 1000 m/s à 2b00 m/s, soudant de nette manière l'un à l'autre ledit corps de récipient (11) et le couvercle (13).

2. Procédé selon la revendication 1, comprenant l'expansion du corps de récipient (11) au niveau de l'extrémité (12) ouverte, avant ledit placement du couvercle (13) à l'intérieur de ladite extrémité (12) ouverte du corps de récipient (11), de manière à fournir un maintien amélioré du couvercle (13) à l'intérieur du corps de récipient (11).

3. Procédé selon la revendication 1, comprenant, la formation d'une zone ondulée (B) sur le corps de récipient, avant ledit placement du couvercle (13) à l'intérieur de ladite extrémité (12) ouverte du corps de récipient (11), ladite zone ondulée (B) commence à une distance égale à la taille de la partie de soudage de couvercle (14), de manière à fournir un maintien amélioré du couvercle (13) à l'intérieur du corps de récipient (11).

4. Procédé selon l'une quelconque des revendications précédentes, dans lequel ledit couvercle (13) comprend au moins une ouverture (43), convenant pour y insérer un tube.

5. Procédé selon la revendication 4, comprenant :
la fourniture d'un bouchon technologique (41) ayant au moins une tige (42) se conformant à ladite au moins une ouverture (43) ; et
l'insertion du bouchon technologique (41) dans ladite au moins une ouverture (43) du couvercle (13), avant l'alimentation en énergie de la bobine (18), de cette manière.

6. Procédé selon la revendication 5, dans lequel la tige (41) est composée d'un matériau aussi dur que le matériau du couvercle (13).

7. Procédé selon la revendication 5, dans lequel la tige (41) est composée d'un matériau plus dur que le matériau du couvercle (13).

8. Procédé selon la revendication 7, dans lequel des tiges (41) sont faites d'un acier durci.

9. Procédé selon l'une quelconque des revendications précédentes, dans lequel ledit corps de récipient (11) et ledit couvercle (13) sont composés du même matériau.

10. Procédé selon l'une quelconque des revendications 1 à 8, dans lequel ledit corps de récipient (11) et ledit couvercle (13) sont composés de matériaux différents.

11. Procédé selon l'une quelconque des revendications précédentes, dans lequel ledit corps de récipient (11) et ledit couvercle (13) sont composés d'un matériau sélectionné parmi l'aluminium, un acier à faible teneur en carbone, le laiton, le cuivre et leurs alliages.

12. Procédé selon l'une quelconque des revendications précédentes, comprenant le placement extérieur d'un cylindre (71) isolé sur ledit corps de récipient (11), durant l'alimentation en énergie de ladite bobine d'induction de soudage (18).

13. Procédé selon l'une quelconque des revendications précédentes, dans lequel ledit couvercle (13) comprend en outre une partie de rebord (15), pour laquelle une valeur d'un diamètre du couvercle (13), à la partie de rebord (15), est égale à la valeur d'un diamètre intérieur du corps de récipient (11), pour de cette manière fournir un maintien du couvercle (13) à l'intérieur du corps de récipient (11), avant que le récipient (10) ait été fermé de manière étanche.
